# EUROPÄISCHE PATENTSCHRIFT

(11) **EP 1 393 826 B1**
(45) Veröffentlichungstag und Bekanntmachung des Hinweises auf die Patenterteilung: **14.12.2005**
(21) Anmeldenummer: 03018498.0
(22) Anmeldetag: 15.08.2003
(51) Int. Cl.: B21B 35/14, F16D 1/06, F16D 3/06

(54) **Kreuzgelenkwelle**
Cardan shaft
Arbre de transmission à joint de Cardan

(30) Priorität: 27.08.2002 DE 10240009
(43) Veröffentlichungstag der Anmeldung: 03.03.2004
(73) Patentinhaber: Spicer Gelenkwellenbau GmbH & Co. KG, 45143 Essen (DE)
(72) Erfinder: Rücker, Andreas, 45472 Mülheim (DE)
(74) Vertreter: Müller, Thomas Michael

(56) Entgegenhaltungen:
- DD-B- 279 424
- DE-A- 3 714 217
- DE-A- 19 748 450
- DE-C- 3 231 752
- DE-U- 7 723 574
- US-A- 4 094 179

## Beschreibung

Die Erfindung betrifft eine Kreuzgelenkwelle zum Antreiben einer Walze eines Walzwerks, umfassend
- eine Verbindungswelle,
- ein erstes Kreuzgelenk, das an einem ersten Ende der Verbindungswelle (5) angeschlossen ist,
- ein zweites Kreuzgelenk, das an einem zweiten Ende der Verbindungswelle (5) angeschlossen ist.
- eine Kupplungshülse, die eine Längsachse aufweiset,
   - die mit dem ersten Kreuzgelenk verbunden ist,
   - die eine Aufnahmebohrung mit einer Öffnung zum Aufnehmen eines Zapfens einer Walze aufweist, wobei die Aufnahmebohrung Übertragungsflächen zum Übertragen von Drehmomenten bildet, und
   - die eine konzentrisch zur Längsachse und von der Öffnung entfernt angeordnete erste Konusfläche aufweist, wobei die erste Konusfläche zur Anlage an eine gegengleich gestaltete erste Gegenfläche an dem Zapfen der Walze zur Vermeidung eines Radialspiels bestimmt ist, sowie
- Mittel, durch welche die erste Konusfläche entlang der Längsachse in Richtung zur Walze mit Kraft beaufschlagt ist.

Eine solche Kreuzgelenkwelle zeigt DE 77 23 574 U1. Hierbei tritt jedoch das Problem auf, dass aufgrund des Eigengewichts der Kreuzgelenkwelle die Längsachse der Kupplüngshülse zur Längsachse des Zapfens abwinkeln kann und somit eine Unwucht entsteht. Dieses Problem tritt insbesondere bei einem großen Stichmaß auf, d. h. bei einem großen Abstand zwischen der Kupplungshülse und dem mit der Kupplungshülse verbundenen Kreuzgelenk. Dadurch entsteht ein langer Kragarm, wie dies z. B. bei der Antriebsanordnung der DE 197 48 450 C2 der Fall ist. Dort sind zwei Walzen übereinander angeordnet, die jeweils durch eine Kreuzgelenkwelle angetrieben werden. Da der radiale Abstand zwischen den Walzen sehr gering ist, sind die Kreuzgelenkwellen derart ausgestaltet, dass die mit den Walzen verbundenen Kreuzgelenke beider Kreuzgelenkwellen axial zueinander versetzt angeordnet sind. Somit ist das Kreuzgelenk der einer Kreuzgelenkwelle näher an der Kupplungshülse angeordnet als des Kreuzgelenk der anderen Kreuzgelenkwelle. Da der Abstand zwischen der Kupplungshülse und dem Gelenkmittelpunkt der letzteren Kreuzgelenkwelle verhältnismäßig groß ist, wirkt sich hier aufgrund des langen Kragarms ein Spiel zwischen der Kupplungshülse und dem Walzenzapfen äußerst negativ aus.

Um Spiel in der Verbindung zwischen der Kreuzgelenkwelle und dem Walzenzapfen auszugleichen, zeigt DE 37 14 217 C2 einen Walzenzapfen, der prismenförmig gestaltet ist, wobei dieser zu seinem freien Ende hin verjüngt ist. Der Walzenzapfen weist drei drehmomentübertragende Flächen auf, die um eine Längsachse angeordnet sind und die in Richtung der Längsachsen einen Winkel einschließen. Die Kupplungshülse der Kreuzgelenkwelle weist Übertragungselemente auf, die zu den drehmomentübertragenden Flächen in Anlage sind und die dem Zapfen abgewandt kreisabschnittsförmige Flächen aufweisen, welche in gegengleiche Ausnehmungen der Kupplungshülse eingreifen. Durch die sphärische Ausbildung können die Obertragungselemente Winkelabweichungen zwischen der Längsachse der Kupplungshülse und der Längsachse des Walzenzapfens ausgleichen. Durch die prismenförmige Ausführung des Walzenzapfens wird durch Beaufschlagung der Kupplungshülse in Richtung zum Walzenzapfen Spiel ausgeglichen.

Die DE 32 31 752 C1 zeigt eine weitere Ausführungsform einer Kupplung zwischen einer Kreuzgelenkwelle und einem Walzenzapfen. Der Walzenzapfen weist hierbei drehmomentübertragende Flächen auf. Die Kupplungshülse der Kreuzgelenkwelle weist Anlageflächen auf, die zur Längsachse jeweils einen Winkel einschließen und zur Walze hin geöffnet ist. Zwischen den drehmomentübertragenden Flächen und den Anlageflächen sitzen keilförmige Übertragungsteile, welche mittels Federn axial in Richtung zur Gelenkwelle beaufschlagt sind. Somit gleiten diese axial entlag der Anlageflächen ab und wandern dabei radial auf die Längsachse zu. Somit wird ein Spiel zwischen der Kupplungshülse und dem Walzenzapfen vermieden.

Nachteilig bei beiden Ausführungen ist jedoch, dass der Spielausgleich an den drehmomentübertragenden Elementen der Kupplung zwischen der Kreuzgelenkwelle und dem Walzenzapfen stattfindet. Hierdurch werden die Spielausgleichselemente stark belastet, so dass diese ausreichend groß dimensioniert werden müssen.

In der DD 279 424 A1 ist eine Kupplung dargestellt, bei der ein Zentrierzapfen in eine Aufnahmebohrung einer Kupplungshülse aufnehmbar ist. Der Zentrierzapfen weist an seinem Ende einen zylindrischen Führungszapfen auf sowie eine von diesem entfernt angeordnete zylindrische Außenfläche. Die Aufnahme bildet eine entsprechende Sacklochbohrung zur Aufnahme des Führungszapfens sowie eine Bohrung im Bereich der Öffnung der Aufnahmebohrung zur Aufnahme der zylindrischen Außenfläche. In der Aufnahmebohrung ist in Anschluss an die Bohrung zur Aufnahme des Führungszapfens eine sich zur Öffnung der Aufnahmebohrung erweiternde konische Bohrung gebildet, durch welche der Führungszapfen auch bei Schrägstellung des Zentrierzapfens in die Sacklochbohrung geführt wird. Somit wird die Kupplungshülse beim Aufschieben auf den Zentrierbolzen derart verlagert, dass beide in etwa koaxial zueinander ausgerichtet sind. Die Zentrierung nach der Montage wird durch den Führungszapfen und durch die zylindrische Außenfläche des Zentrierbolzens gewährleistet

Nachteilig ist jedoch, dass zwischen dem Führungszapfen und der Sacklochbohrung bzw. der zylindrischen Außenfläche des Zentrierbolzens und der Bohrung im Bereich der Öffnung der Aufnahmebohrung ein geringes Spiel vorhanden sein muss, damit der Zentrierbolzen vollständig in die Aufnahmebohrung eingeschoben werden kann. Somit ergeben sich geringe Toleranzen, die zu Unwuchten führen.

Aufgabe der vorliegenden Erfindung ist es, eine eingangs beschriebene Kreuzgelenkwelle bereit zu stellen, die einen einfachen Spielausgleich und eine einfache Zentrierung zwischen der Kupplungshülse der Kreuzgelenkwelle und einem Zapfen einer Walze ermöglicht, wobei die Bauteile zum Spielausgleich nicht an einer Drehmomentübertragung teilnehmen.

Die Aufgabe wird dadurch gelöst, dass die Kupplungshülse im Bereich der Öffnung eine zylindrische Bohrung aufweist, die dazu bestimmt ist, dass sich der Zapfen mit einer entsprechend gestalteten zylindrischen Außenfläche gegen diese abstützt.

Hierbei ist gewährleistet, dass die Übertragungsflächen und die erste Konusfläche separate Flächen darstellen, wobei die erste Konusfläche nicht an einer Drehmomentübertragung teilnimmt. Die Mittel, durch welche die erste Konusfläche entlang der Längsachse in Richtung zur Walze mit Kraft beaufschlagt sind, sorgen dafür, dass radiales Spiel zwischen der Kupplungshülse und dem Zapfen der Walze herausgedrückt wird, indem die erste Konusfläche tiefer in die entsprechende erste Gegenfläche gedrückt wird.

Die erste Konusfläche ist zumindest auf einem Teil eines gedachten Konus angeordnet und muß nicht zwingend um die Längsachse geschlossen sein. Es können durchaus mehrere erste Konusflächen vorgesehen sein. Vorzugsweise ist die erste Konusfläche jedoch durch eine um die Längsachse angeordnete geschlossene Fläche dargestellt.

Um Drehmoment übertragen zu können, weist die Kupplungshülse einen von einem Kreis abweichenden Querschnitt auf. Die Aufnahmebohrung kann zum Beispiel diametral gegenüberliegende Abflachungen aufweisen.

Die Mittel, durch welche die erste Konusfläche entlang der Längsachse in Richtung zur Walze mit Kraft beaufschlagt sind, können durch Federmittel dargestellt sein, welche zum Beispiel in einer Verschiebeeinheit der Verbindungswelle angeordnet sein können.

In einer ersten Ausführungsform ist die erste Konusfläche dadurch gebildet, dass ausgehend von der Aufnahmebohrung eine koaxial zur Längsachse angeordnete Zentrierbohrung vorgesehen ist, die eine Innenfläche aufweist, die in Richtung zur Aufnahmebohrung konisch erweitert ist und zur Anlage an einen gegengleich ausgebildeten Zentrierzapfen der Walze bestimmt ist.

Die Zentrierbohrung kann Bestandteil eines Zentrierrings sein, der in eine zylindrische Bohrung der Kupplungshülse eingesetzt ist. Somit muß in der Kupplungshülse lediglich eine einfach zu fertigende zylindrische Bohrung vorgesehen werden. Die Fertigung einer konusförmigen Innenfläche im Zentrierring gestaltet sich einfacher, da dieser leichter zu handhaben ist. Ferner kann bei Verschleiß der Zentrierring gewechselt werden, ohne dass die gesamte Kupplungshülse ausgetauscht werden muß.

Ebenso kann der Zentrierzapfen des Zapfens mit einer zylindrischen Außenfläche versehen sein, wobei auf dem Zentrierzapfen ein Kegelring mit zylindrische Bohrung und konischer Außenfläche sitzt.

Um eine bessere radiale Abstützung zu gewährleisten, kann sich ausgehend von der Aufnahmebohrung an die konische Zentrierbohrung eine zylindrische Bohrung anschließen, in der ein zylindrischer Ansatz am Zentrierzapfen sitzt.

In einer zweiten Ausführungsform ist die erste Konusfläche dadurch gebildet, dass in der Aufnahmebohrung koaxial zur Längsachse ein kegelstumpfförmiger Zentrieransatz vorgesehen ist, dessen Außenfläche zur Öffnung der Aufnahmebohrung hin verjüngt ist und zur Anlage an eine gegengleich ausgebildete Innenfläche einer Zentrierbohrung des Zapfens der Walze bestimmt ist.

Der Zentrieransatz kann hierbei mit der Kupplungshülse oder mit einer Gelenkgabel des ersten Kreuzgelenks verbunden sein.

Es können Federmittel vorgesehen sein, mittels derer der Zentrieransatz in Richtung zum Zapfen beaufschlagt ist. Dies stelle eine weitere Ausführungsform der Mittel dar, durch welche die erste Konusfläche entlang der Längsachse in Richtung zur Walze mit Kraft beaufschlagt ist.

Ferner kann zu diesem Zweck vorgesehen sein, dass der Zentrieransatz ein Basisteil aufweist, das an der Kupplungshülse oder am ersten Kreuzgelenk befestigt ist und das eine konische Außenfläche zur Anlage an die Gegenfläche aufweist, und dass der Zentrieransatz ein Zentrierteil aufweist, das mittels Federmittel, die gegen das Basisteil und das Zentrierteil abgestützt sind, in Richtung zum Zapfen beaufschlagt ist und das eine konische Außenfläche zur Anlage an die Gegenfläche aufweist.

Bevorzugte Ausführungsbeispiele werden im folgenden anhand der Zeichnungen beschrieben. Hierin zeigt
- Figur 1: eine Seitenansicht mit Teilschnitten zweier erfindungsgemäßer Kreuzgelenkwellen;
- Figur 2: einen Schnitt durch eine Kupplungshalse einer ersten Ausführungsform einer Kreuzgelenkwelle mit einem konischen Zentrierzapfen am Zapfen der Walze;
- Figur 3: einen Schnitt durch eine Kupplungshülse gemäß Figur 2, wobei auf einen Zentrierzapfen des Zapfens der Walze ein konusförmiger Ring sitzt:
- Figur 4: einen Schnitt durch eine Kupplungshülse gemäß Figur 2, wobei der Zentrierzapfen des Zapfens der Walze einen zylindrischen Zentrieransatz aufweist;
- Figur 5: einen Schnitt durch eine Kupplungshülse einer zweiten Ausführungsform einer Kreuzgelenkwelle mit einem konischen Zentrieransatz, der mit der Kupplungshülse verbunden ist;
- Figur 6: einen Schnitt durch eine Kupplungshülse gemäß Figur 5, wobei der Zentrieransatz mit dem ersten Kreuzgelenk verbunden ist;
- Figur 7: einen Schnitt durch eine Kupplungshülse gemäß Figur 5, wobei der Zentrieransatz axial verschiebbar ist;
- Figur 8: einen Schnitt durch eine Kupplungshülse gemäß Figur 5, wobei der Zentrieransatz ein Basisteil und ein Zentrierteil aufweist; und
- Figur 9: einen Schritt durch eine Kupplungshülse gemäß Figur 5, wobei die ersten Gegenfläche durch eine Buchse dargestellt ist

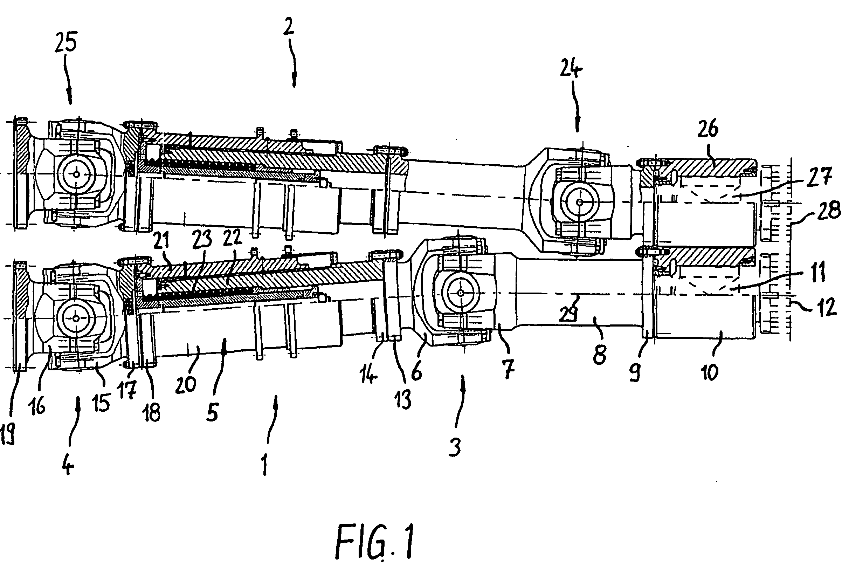

Figur 1 zeigt eine erste Kreuzgelenkwelle 1 und eine zweite Kreuzgelenkwelle 2 zum Antreiben von Walzen eines Walzwerks. Die erste Kreuzgelenkwelle 1 weist ein erstes Kreuzgelenk 3 sowie ein zweites Kreuzgelenk 4 auf, die über eine Verbindungswelle 5 miteinander verbunden sind. Das erste Kreuzgelenk 3 umfasst eine erste Gelenkgabel 6 und eine zweite Gelenkgabel 7. Die zweite Gelenkgabel 7 geht in ein Verbindungsrohr 8 über, an dessen Ende ein Flansch 9 vorgesehen ist. Der Flansch 9 ist mit einer Kupplungshülse 10 verbunden, welche auf einen Zapfen 11 einer Walze 12 sitzt und drehfest mit dieser verbunden ist.

Die zweite Gelenkgabel 7 des ersten Gelenks 3 weist einen Flansch 13 auf, der mit einem Flansch 14 der Verbindungswelle 5 verbunden ist.

Das zweite Kreuzgelenk 4 weist ebenfalls eine erste Gelenkgabel 15 und eine zweite Gelenkgabel 16 auf, wobei die erste Gelenkgabel 15 über einen Flansch 17 mit einem Flansch 18 der Verbindungswelle 5 verbunden ist. Die zweite Gelenkgabel 16 weist ebenfalls einen Flansch 19 auf, welcher zum Verbinden des zweiten Gelenks 4 mit einem Antriebsaggregat dient.

Die Verbindungswelle 5 weist eine Verschiebeeinheit 20 auf. Diese ist durch eine Verschiebehülse 21 gebildet, welche mit dem Flansch 18 verbunden ist, worüber die Verbindungswelle 5 mit dem zweiten Gelenk 4 verbunden ist. In der Verschiebehülse 21 ist ein Verschiebezapfen 22 axial verschiebbar geführt. Der Verschiebezapfen 22 ist mit dem Flansch 14 zum Verbinden der Verbindungswelle 5 mit dem ersten Gelenk 3 verbunden. Eine Feder 23 ist innerhalb der Verschiebeeinheit 20 angeordnet und ist einerseits gegen die Verschiebehülse 21 und andererseits gegen den Verschiebezapfen 22 abgestützt und beaufschlagt den Verschiebezapfen 22 somit zur Einnahme einer ausgefahrenen Position. Somit ist gewährleistet, dass stets eine Druckkraft auf das erste Kreuzgelenk 3 und somit auf die Kupplungshülse 10 ausgeübt ist, so dass die Kupplungshülse 10 fest auf dem Zapfen 11 gehalten ist.

Die zweite Kreuzgelenkwelle 2 ist vergleichbar zur ersten Kreuzgelenkwelle 1 ausgebildet, wobei dieses ebenfalls ein erstes Kreuzgelenk 24 und ein zweites Kreuzgelenk 25 aufweist. Das erste Kreuzgelenk 24 ist in einem geringeren Abstand zu einer Kupplungshülse 26 angeordnet, welche mit einem Zapfen 27 einer weiteren Walze 28 verbunden ist.

Da das erste Gelenk 24 der zweiten Gelenkwelle 2 näher an der Kupplungshülse 26 angeordnet ist als das erste Kreuzgelenk 3 der ersten Kreuzgelenkwelle 1 zur Kupplungshülse 10, sind die beiden ersten Kreuzgelenke 3, 24 axial zueinander versetzt angeordnet. Hierdurch lassen sich die Kreuzgelenkwellen 1, 2 radial näher zueinander anordnen, da die Rohrabschnitte der Gelenkwellen 1, 2 einen geringeren Durchmesser aufweisen als die ersten Gelenke 3, 24. Hierbei tritt jedoch insbesondere bei der ersten Gelenkwelle 1 das Problem auf, dass aufgrund des langen Kragarms, der durch den großen Abstand des ersten Gelenks 3 zur Kupplungshülse 10 entsteht, eine Unwucht entsteht, da zwischen der Kupplungshülse 10 und dem Zapfen 11 ein Radialspiel vorhanden ist, um eine Montage zu gewährleisten. Aufgrund der Schwerkraft der ersten Kreuzgelenkwelle 1 wird das Verbindungsrohr 8 relativ zu einer Längsachse 29 des Zapfens 11 nach unten abgewinkelt, so dass eine Verlagerung des Schwerpunkts entsteht.

Um dies zu vermeiden, sind Spielausgleichselemente vorgesehen, wie sie in den folgenden Figuren beschrieben sind.

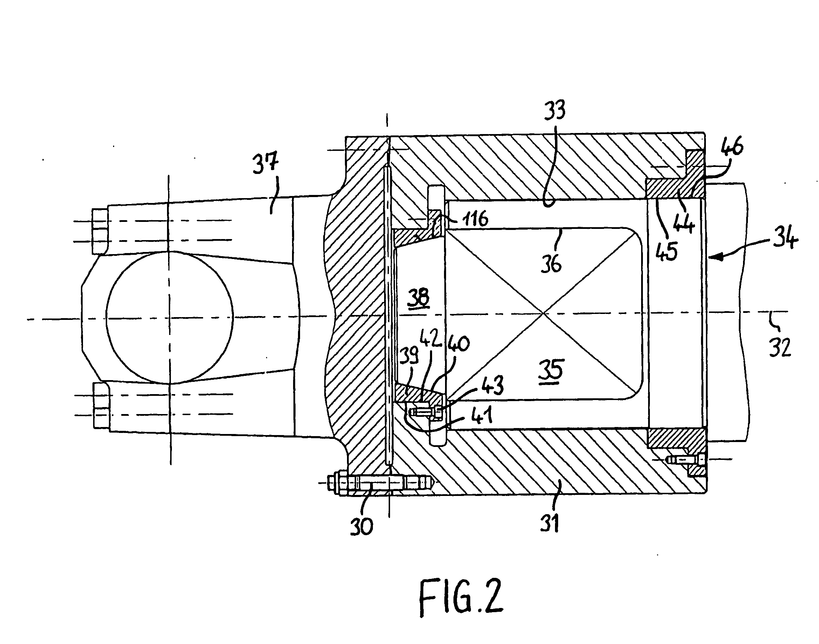

Figur 2 zeigt einen Längsschnitt durch die Verbindungsanordnung zwischen der zweiten Gelenkgabel 37 des ersten Gelenks und der Walze. Die zweite Gelenkgabel 37 ist über Schraubverbindungen 30 mit einer Kupplungshülse 31 drehfest verbunden. Um eine Längsachse 32 der Kupplungshülse 31 ist eine Aufnahmebohrung 33 in der Kupplungshülse 31 vorgesehen, wobei die Aufnahmebohrung 33 eine Öffnung 34 aufweist, die der zweiten Gelenkgabel 37 abgewandt ist. In die Öffnung 34 der Aufnahmebohrung 33 ist ein Zapfen 35 einer Walze eingesteckt. Der Zapfen 35 weist Abflachungen 36 auf, die mit gegengleichen Abflachungen in der Aufnahmebohrung 33 in Anlage sind und somit aufgrund des von einem Kreis abweichenden Querschnitts eine Drehmomentübertragung ermöglichen. Ausgehend von der Aufnahmebohrung 33 ist eine koaxial zur Längsachse 32 angeordnete Bohrung 42 vorgesehen. In die Bohrung 37 ist ein Zentrierring 39 eingesetzt, der eine erste Konusfläche 40 in Form einer konischen Innenfläche und eine zylindrische Außenfläche 41 aufweist. Die erste Konusfläche 40 ist in Anlage zu einer gegengleich ausgebildeten ersten Gegenfläche 116 eines Zentrierzapfens 38 am freien Ende des Zapfens 35. Mit der zylindrischen Außenfläche 41 sitzt der Zentrierring 39 in der Bohrung 42 der Kupplungshülse 31 und ist über Schraubverbindungen 43 mit der Kupplungshülse 31 fest verbunden.

Im Bereich der Öffnung 34 der Aufnahmebohrung 33 ist in die Aufnahmebohrung 33 ein Ring 44 eingesetzt, der eine zylindrische Bohrung 45 aufweist, durch den der Zapfen 35 hindurchgeführt und über eine zylindrische Außenfläche 46 radial abgestützt ist. Der Ring 44 ist mittels Schraubverbindungen 47 an einer Kupplungshülse 31 festgelegt. Somit stützt sich der Zapfen 35 an seinem freien Ende über den Zentrieransatz 38 und an seinem der Walze zugewandten Ende über die zylindrische Außenfläche 46 gegen die Kupplungshülse 31 ab, so dass eine definierte Abstützung des Zapfens 35 gewährleistet ist. Aufgrund der Druckkraft der Feder der Verschiebeeinheit, die in der Verbindungswelle vorgesehen ist, wird eine stetiger Druck auf die Kupplungshülse 31 in Richtung zur Walze ausgeübt, so dass der Zentrierring 39 fest auf den Zentrieransatz 38 gedrückt wird und ein radiales Spiel vermieden wird. Somit ist gewährleistet, dass die Längsachse des Zapfens 35 und die Längsachse 32 der Kupplungshülse 31 möglichst genau aufeinander liegen, so dass sich keine Unwuchten ergeben.

In den folgende Figuren sind weitere Ausführungsbeispiele gezeigt, wobei Bauteile, die mit Bauteilen der Figur 2 übereinstimmen, dort beschrieben sind.

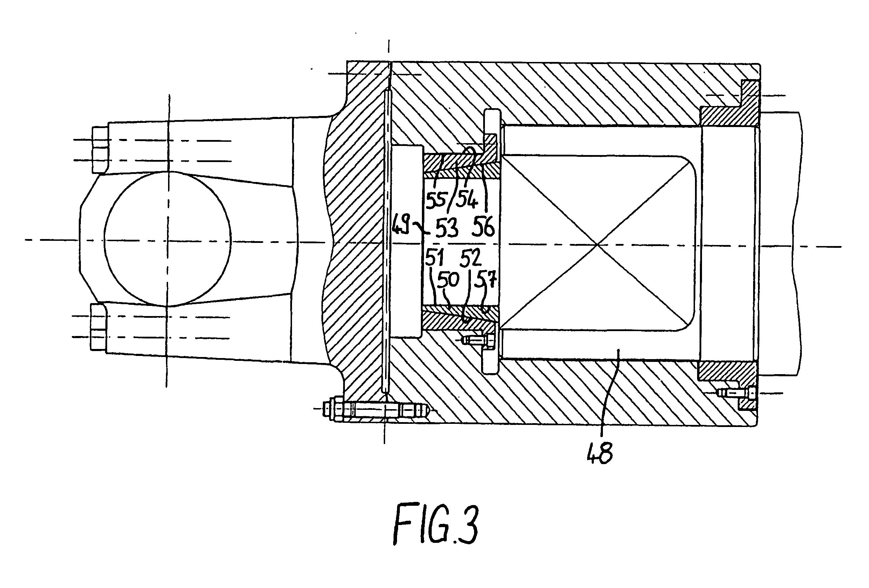

In Figur 3 ist eine zur Figur 2 vergleichbare Kupplungsanordnung dargestellt. Es ist jedoch ein Zapfen 48 vorgesehen, der einen Zentrierzapfen 49 mit einer zylindrischen Außenfläche 57 aufweist. Auf dem Zentrierzapfen 49 sitzt ein Ring 50, der eine zylindrische Bohrung 51 und eine erste Gegenfläche 52 in Form einer konusförmigen Außenfläche aufweist, wobei sich die erste Gegenfläche 52 zum freien Ende des Zapfens 48 hin verjüngt.

In Anschluss an die Aufnahmebohrung ist eine Bohrung 55 vorgesehen, in der ein Zentrierring 53 sitzt, der eine zylindrische Außenfläche 54 und eine erste Konusfläche 56 in Form einer konusförmigen Innenfläche aufweist, wobei die erste Konusfläche 56 mit der ersten Gegenfläche 52 des Rings 50 in Anlage ist.

Dadurch, dass die erste Konusfläche 56 und die erste Gegenfläche 52 durch separate Ringe 50, 53 gebildet sind, lassen sich diese bei Verschleiß einfach auswechseln, ohne dass der Zapfen 48 der Walze nachgearbeitet werden muss oder die gesamte Kupplungshülse ausgetauscht werden muss.

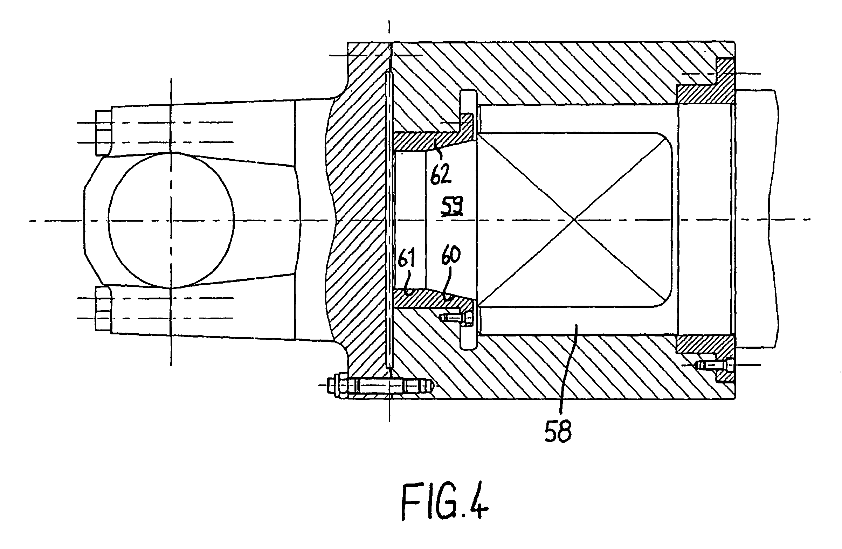

Figur 4 zeigt eine Kupplungsanordnung gemäß Figur 2, wobei der Zapfen 58 einen Zentrierzapfen 59 aufweist, der ausgehend vom Zapfen 58 eine erste Gegenfläche 60 in Form einer konusförmigen Außenfläche 60 aufweist, wobei letztere zum freien Ende des Zentrierzapfens 59 hin in eine zylindrische Außenfläche 61 übergeht. Die erste Konusfläche 60 und die zylindrische Außenfläche 61 sind in Anlage zu einem gegengleich ausgebildeten Ring 62, der mit der Kupplungshülse verbunden ist. Die zylindrische Außenfläche 61 sorgt für eine definierte radiale Abstützung.

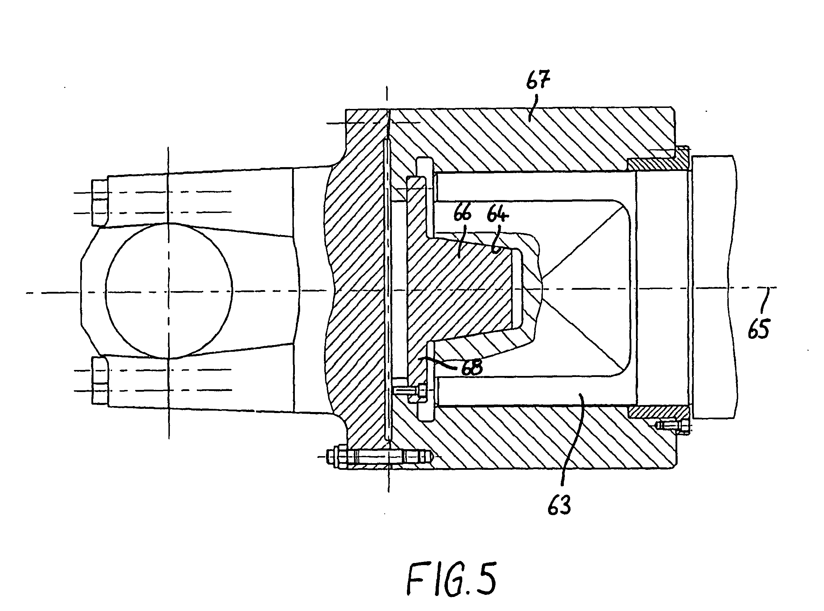

Figur 5 zeigt eine zur Kupplungsanordnung gemäß Figur 2 alternative Ausführungsform. Der Zapfen 63 weist eine erste Gegenfläche 64 auf, die durch eine zentrale konusförmige Zentrierbohrung gebildet ist, wobei die Zentrierbohrung koaxial zu einer Längsachse 65 der Kupplungshülse 67 angeordnet ist. Ferner ist eine erste Konusfläche 66 vorgesehen, welcher über einen Flansch 68 mit der Kupplungshülse 67 verbunden ist. Die erste Konusfläche 66 ist durch einen Kegelstumpf gebildet und greift in die Zentrierbohrung ein.

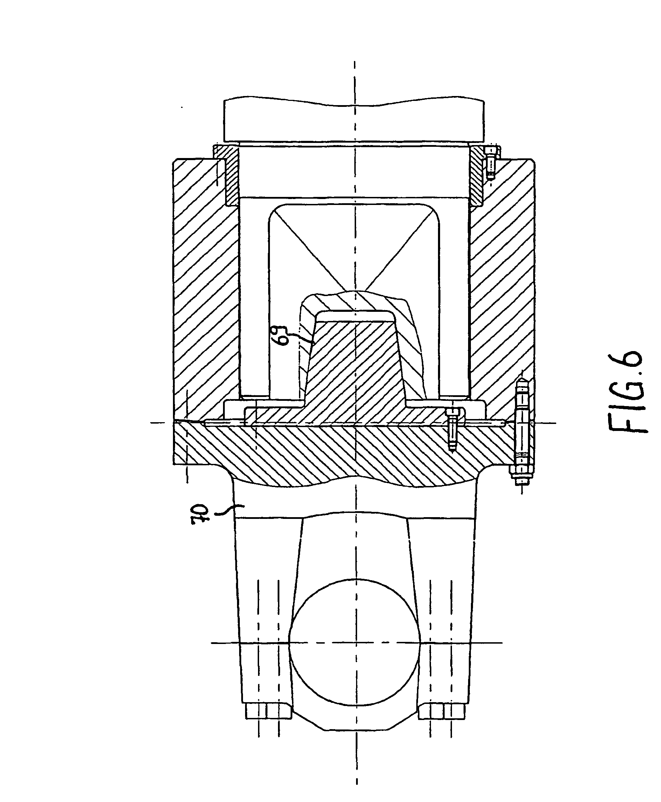

Die Figur 6 zeigt eine Kupplungsanordnung gemäß Figur 5, wobei eine erste Konusfläche 69 in Form eines Zentrieransatzes vorgesehen ist, die nicht mit der Kupplungshülse sondern mit einer Gelenkgabel 70 des ersten Kreuzgelenks verbunden ist.

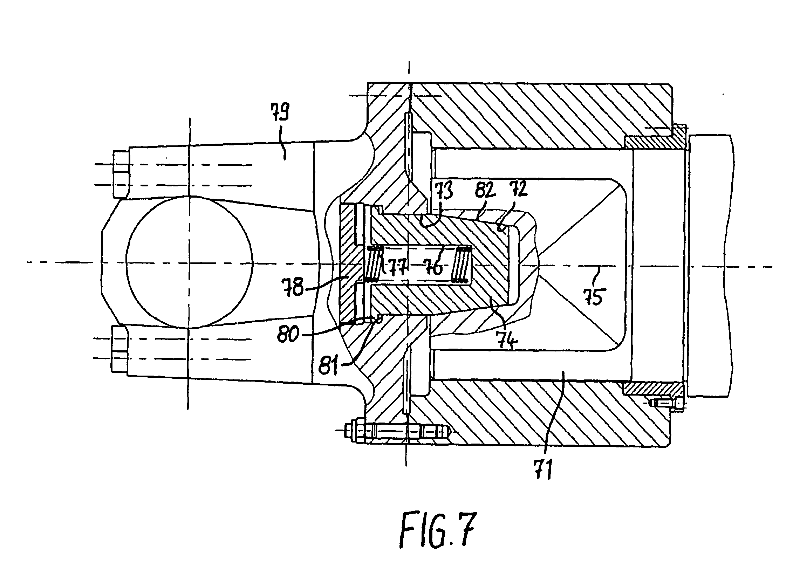

Figur 7 zeigt eine Kupplungsanordnung ähnlich der gemäß Figur 6. Der Zapfen weist eine erste Gegenfläche 72 in Form einer zentralen Zentrierbohrung auf, welche koaxial zu einer Längsachse 75 angeordnet ist und zum freien Ende des Zapfens 71 hin geöffnet ist. Die erste Gegenfläche 72 verjüngt sich ausgehend vom freien Ende des Zapfens.

In einer Gelenkgabel 79 des ersten Kreuzgelenks ist eine koaxial zur Längsachse 75 angeordnete zentrale Bohrung 73 vorgesehen, welche der ersten Gegenfläche 72 gegenüberliegend angeordnet ist. In der Bohrung 73 ist ein Zentrieransatz 74 axial entlang der Längsachse 75 verlagerbar angeordnet. Der Zentrieransatz 74 weist eine konische Außenfläche auf, welche die erste Konusfläche 82 bildet und mit welcher der Zentrieransatz 74 in Anlage zu der Wandung der Zentrierbohrung 72 gehalten ist.

In dem Zentrieransatz 74 ist eine zentrale Bohrung 76 vorgesehen, welche in Richtung zur Gelenkgabel 79 geöffnet ist. In der Bohrung ist eine Druckfeder 77 angeordnet, welche einerseits gegen eine Bodenplatte 78, die mit der Gelenkgabel 79 verbunden ist, und andererseits gegen den Zentrieransatz 74 abgestützt ist. Dadurch ist der Zentrieransatz 74 in Richtung zum Zapfen 71 mit Kraft beaufschlagt, so dass gewährleistet ist, dass der Zentrieransatz 74 in der Zentrierbohrung 72 gehalten ist und ein radiales Spiel herausgedrückt wird.

An demjenigen Ende des Zentrieransatzes 74, welches dem Zapfen 71 abgewandt ist, weist der Zentrieransatz 74 einen umlaufenden Kragen 80 auf, welcher in einer maximal ausgeschobenen Position des Zentrieransatzes 74 in Anlage zu einer kreisringförmigen Anlagefläche 81 gelangt. Dadurch ist gewährleistet, dass bei einer Demontage der Kupplungshülse vom Zapfen der Zentrieransatz 74 an der Gelenkgabel 79 gehalten ist.

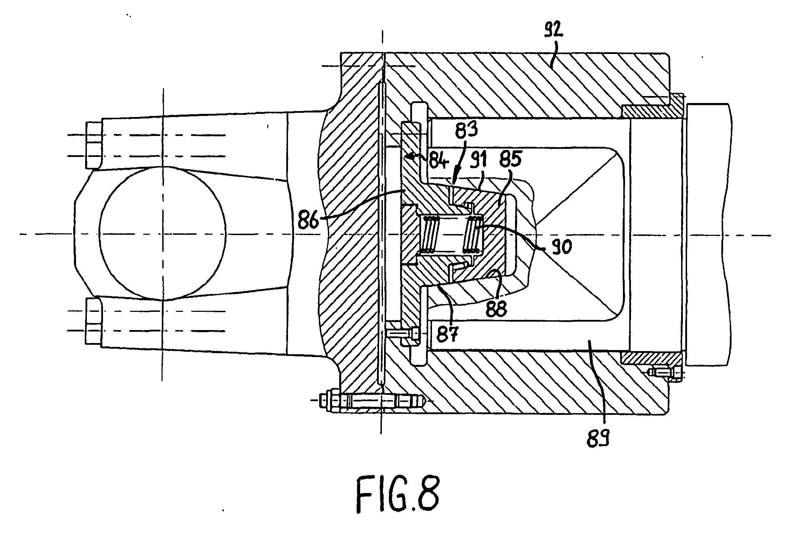

Figur 8 zeigt eine ähnliche Ausbildung einer Kupplungsanordnung gemäß Figur 5. Hierbei ist ebenfalls ein Zentrieransatz 83 vorgesehen, der mit der Kupplungshülse 92. Verbunden ist. Der Zentrieransatz 83 umfasst ein Basisteil 84 sowie ein Zentrierteil 85. Das Basisteil 84 weist einen Flansch 86 auf, über den es mit der Kupplungshülse 92 verbunden ist. Ferner weist das Basisteil 84 einen dem Zapfen 89 zugewandten Abschnitt mit einer konusförmigen Außenfläche 87 auf. Zu dem Basisteil 84 ist das Zentrierteil 85 axial verschiebbar angeordnet. Das Zentrierteil 85 weist eine ebenfalls konusförmige Außenfläche auf, welche die erste Konusfläche 91 bildet. Die beiden konusförmigen Außenflächen 87, 91 sind in Anlage zu einer konusförmigen Zentrierbohrung im Zapfen 89 gehalten, wobei die konusförmige Zentrierbohrung die erste Gegenfläche 88 bildet. Eine Druckfeder ist einerseits gegen das Basisteil 84 und andererseits gegen das Zentrierteil 85 abgestützt, so dass das Zentrierteil 85 sicher in der Zentrierbohrung gehalten ist.

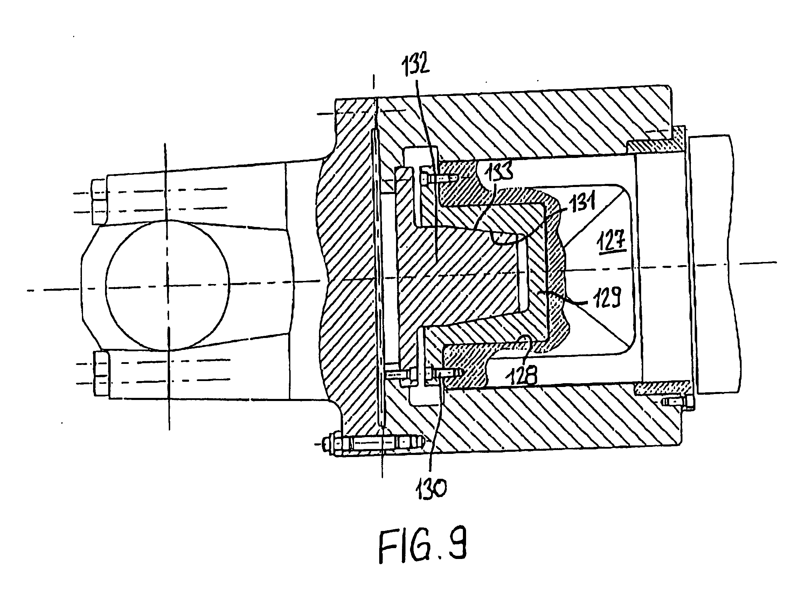

Figur 9 zeigt eine Kupplungshülse gemäß Figur 5, wobei der Zapfen 127 ausgehend von seinem freien Ende eine zylindrische Bohrung 128 aufweist, in die eine Buchse 129 eingesetzt ist. Die Buchse 129 ist über Schraubverbindungen 130 am Zapfen 127 festgelegt. Die Buchse 129 weist eine erste Gegenfläche 131 in Form einer konusförmigen Zentrierbohrung auf, in die ein Zentrieransatz 132 eintaucht, wobei der Zentrieransatz 132 eine erste Konusfläche 133 bildet. Vorteil bei dieser Ausführung ist, dass bestehende Walzen mit Zapfen 127 derart umgebaut werden können, dass sie eine erste Gegenfläche 131 aufweisen, welche in Anlage zur ersten Konusfläche 133 gehalten sind.

### Bezugszeichenliste

- 1: erste Kreuzgelenkwelle
- 2: zweite Kreuzgelenkwelle
- 3: erstes Kreuzgelenk
- 4: zweites Kreuzgelenk
- 5: Verbindungswelle
- 6: erste Gelenkgabel
- 7: zweite Gelenkgabel
- 8: Verbindungsrohr
- 9: Flansch
- 10: Kupplungshülse
- 11: Zapfen
- 12: Walze
- 13: Flansch
- 14: Flansch
- 15: erste Gelenkgabel
- 16: zweite Gelenkgabel
- 17: Flansch
- 18: Flansch
- 19: Flansch
- 20: Verschiebeeinheit
- 21: Verschiebehülse
- 22: Verschiebezapfen
- 23: Feder
- 24: erstes Kreuzgelenk
- 25: zweites Kreuzgelenk
- 26: Kupplungshülse
- 27: Zapfen
- 28: Walze
- 29: zweite Gelenkgabel
- 30: Schraubverbindung
- 31: Kupplungshülse
- 32: Längsachse
- 33: Aufnahmebohrung
- 34: Öffnung
- 35: Zapfen
- 36: Abflachung
- 37: erste Gelenkgabel
- 38: Zentrierzapfen
- 39: Zentrierring
- 40: erste Konusfläche
- 41: Außenfläche
- 42: Bohrung
- 43: Schraubverbindung
- 44: Ring
- 45: Bohrung
- 46: Außenfläche
- 47: Schraubverbindung
- 48: Zapfen
- 49: Zentrierzapfen
- 50: Ring
- 51: Bohrung
- 52: erste Gegenfläche
- 53: Zentrierring
- 54: Außenfläche
- 55: Bohrung
- 56: erste Konusfläche
- 57: Außenfläche
- 58: Zapfen
- 59: Zentrierzapfen
- 60: erste Gegenfläche
- 61: Außenflächen
- 62: Ring
- 63: Zapfen
- 64: erste Gegenfläche
- 65: Längsachse
- 66: erste Konusfläche
- 67: Kupplungshülse
- 68: Flansch
- 69: erste Konusfläche
- 70: Gelenkgabel
- 71: Zapfen
- 72: erste Gegenfläche
- 73: Bohrung
- 74: Zentrieransatz
- 75: Längsachse
- 76: Bohrung
- 77: Druckfeder
- 78: Bodenplatte
- 79: Gelenkgabel
- 80: Kragen
- 81: Anlagefläche
- 82: erste Konusfläche
- 83: Zentrieransatz
- 84: Basisteil
- 85: Zentrierteil
- 86: Flansch
- 87: Außenfläche
- 88: erste Gegenfläche
- 89: Zapfen
- 90: Druckfeder
- 91: erste Konusfläche
- 92: Kupplungshülse

- 127: Zapfen
- 128: Bohrung
- 129: Buchse
- 130: Schraubverbindung
- 131: erste Gegenfläche
- 132: Zentrieransatz
- 133: erste Konusfläche

## Patentansprüche

1. Kreuzgelenkwelle zum Antreiben einer Walze eines Walzwerks, umfassend
- eine Verbindungswelle (5),
- ein erstes Kreuzgelenk (3), das an einem ersten Ende der Verbindungswelle (5) angeschlossen ist,
- ein zweites Kreuzgelenk (4), das an einem zweiten Ende der Verbindungswelle (5) angeschlossen ist,
- eine Kupplungshülse (10, 26, 31, 67, 92),
- die eine Längsachse (29, 32, 65, 75) aufweist,
- die mit dem ersten Kreuzgelenk (3) verbunden ist,
- die eine Aufnahmebohrung (33) mit einer Öffnung (34) zum Aufnehmen eines Zapfens (11, 27, 35, 48, 58, 63, 71, 89) einer Walze (12, 28) aufweist, wobei die Aufnahmebohrung (33) Übertragungsflächen (122) zum Übertragen von Drehmomenten bildet, und
- die eine konzentrisch zur Längsachse (29, 32, 65, 75) und von der Öffnung entfernt angeordnete erste Konusfläche (40, 56, 66, 69, 82, 91, 133) aufweist, wobei die erste Konusfläche (40, 56, 66, 69, 82, 91, 133) zur Anlage an eine gegengleich gestaltete erste Gegenfläche (52, 60) an dem Zapfen (11, 27, 35, 48, 58, 63, 71, 89) der Walze (12, 28) zur Vermeidung eines Radialspiels bestimmt ist, sowie
- Mittel (23, 77, 90), durch welche die erste Konusfläche (40, 56, 60, 82, 91, 133) entlang der Längsachse (29, 32, 65, 75) in Richtung zur Walze (12, 28) mit Kraft beaufschlagt ist,
**dadurch gekennzeichnet,**
**dass** die Kupplungshülse (10, 26, 31, 67, 92) im Bereich der Öffnung (34) eine zylindrische Bohrung (45) aufweist, die dazu bestimmt ist, dass sich der Zapfen (11, 27, 35, 48, 58, 63, 71, 89, 93) mit einer entsprechend gestalteten zylindrischen Außenfläche (46) gegen diese abstützt.

2. Kreuzgelenkwelle nach Anspruch 1,
**dadurch gekennzeichnet,**
**dass** die Mittel, durch welche die erste Konusfläche (40, 56, 66, 69, 82, 91, 133) entlang der Längsachse (29, 32, 65, 75) in Richtung zur Walze (12, 28) mit Kraft beaufschlagt sind, durch Federmittel (23, 77, 90) dargestellt sind.

3. Kreuzgelenkwelle nach Anspruch 2,
**dadurch gekennzeichnet,**
**dass** die Federmittel (23) in einer Verschiebeeinheit (20) der Verbindungswelle (5) angeordnet sind.

4. Kreuzgelenkwelle nach einem der Ansprüche 1 bis 3,
**dadurch gekennzeichnet,**
**dass** ausgehend von der Aufnahmebohrung (33) eine koaxial zur Längsachse (32) angeordnete Zentrierbohrung vorgesehen ist, die eine Innenfläche (40, 56) aufweist, die in Richtung zur Aufnahmebohrung (33) konisch erweitert ist und zur Anlage an einen gegengleich ausgebildeten Zentrierzapfen (38, 49, 59) der Walze bestimmt ist.

5. Kreuzgelenkwelle nach Anspruch 4,
**dadurch gekennzeichnet,**
**dass** die Zentrierbohrung Bestandteil eines Zentrierrings (39, 50, 62) ist, der in eine zylindrische Bohrung (42, 55) der Kupplungshülse (31) eingesetzt ist.

6. Kreuzgelenkwelle nach einem der Ansprüche 1 bis 3,
**dadurch gekennzeichnet,**
**dass** in der Aufnahmebohrung koaxial zur Längsachse (65) ein kegelstumpfförmiger Zentrieransatz (66, 69, 74, 83, 132) vorgesehen ist, dessen Außenfläche zur Öffnung der Aufnahmebohrung hin verjüngt ist und zur Anlage an eine gegengleich ausgebildete Innenfläche einer Zentrierbohrung (64, 72, 88) des Zapfens (63, 71, 89, 127) der Walze bestimmt ist.

7. Kreuzgelenkwelle nach Anspruch 6,
**dadurch gekennzeichnet.**
**dass** Federmittel (77) vorgesehen sind, mittels derer der Zentrieransatz (74) in Richtung zum Zapfen (71) beaufschlagt ist.

8. Kreuzgelenkwelle nach einem der Ansprüche 6 oder 7,
**dadurch gekennzeichnet,**
**dass** der Zentrieransatz (83) ein Basisteil (84) aufweist, das an der Kupplungshülse (92) oder am ersten Kreuzgelenk befestigt ist und das eine konische Außenfläche (87) zur Anlage an die Gegenfläche aufweist, und **dass** der Zentrieransatz (83) ein Zentrierteil (85) aufweist, das mittels Federmittel (90), die gegen das Basisteil (84) und das Zentrierteil (85) abgestützt sind, in Richtung zum Zapfen (89) beaufschlagt ist und das eine konische Außenfläche (91) zur Anlage an die Gegenfläche aufweist.

## Claims

1. Universal joint shaft for driving a roll of a rolling mill, comprising
- a connection shaft (5),
- a first universal joint (3), connected to a first end of the connection shaft (5),
- a second universal joint (4), connected to a second end of the connection shaft (5),
- a coupling sleeve (10, 26, 31, 67, 92),
- having a longitudinal axis (29, 32, 65, 75),
- connected to the first universal joint (3),
- having a receiving bore (33) with an opening (34) for accommodating a journal (11, 27, 35, 48, 58, 63, 71, 89) of a roll (12, 28), wherein the receiving bore (33) forms transmission faces (122) for transmitting torques, and
- having a first conical face (40, 56, 66, 69 82, 91, 133) arranged concentrically to the longitudinal axis (29, 32, 65, 75) and arranged remote from the opening, wherein the first conical face (40, 56, 66, 69, 82, 91, 133) serves for abutting a first counter face (52, 60) formed counter-fittingly on the journal (11, 27, 35, 48, 58, 63, 71, 89) of the roll (12, 28) for preventing a radial play, and
- means (23, 77, 90), by which the first conical face (40, 56, 60, 82, 91, 133) is urged by a force along the longitudinal axis (29, 32, 65, 75) in direction towards the roll (12, 28),
**characterised in that**
the coupling sleeve (10, 26, 31, 67, 92) has in the area of the opening (34) a cylindrical bore (45), serving to support a cylindrical outer face (46) of the journal (11, 27, 35, 48, 58, 63, 71, 89, 93) formed correspondingly thereto.

2. Universal joint shaft according to claim 1,
**characterised in that**
the means, by which the first conical face (40, 56, 66, 69, 82, 91, 133) is urged by a force along the longitudinal axis (29 , 32, 65, 75) in the direction to the roll (12, 28), are represented by spring means (23, 77, 90).

3. Universal joint shaft according to claim 2,
**characterised in that**
the spring means (23) are arranged in a sliding unit (20) of the connection shaft (5).

4. Universal joint shaft according to one of claims 1 to 3,
**characterised in that**
starting from the receiving bore (33) a centering bore, arranged coaxially to the longitudinal axis (32), is provided, which has an inner face (40, 56), which is conically enlarged in direction towards the receiving bore (33) and serving for abutment on a centering journal (38, 49, 59) of the roll formed counter-fittingly.

5. Universal joint shaft according to claim 4,
**characterised in that**
the centering bore is part of a centering ring (39, 50, 62), which is inserted into a cylindrical bore (42, 55) of the coupling sleeve (31).

6. Universal joint shaft according to one of claims 1 to 3,
**characterised in that**
in the receiving bore a truncated cone-like centering lug (56, 69, 74, 83, 132) is provided coaxially to the longitudinal axis (65), which outer face is tapered towards the opening of the receiving bore and serves for abutment on an inner face of a centering bore (64, 72, 88) of the journal (63, 71, 89, 127) of the roll formed counter-fittingly.

7. Universal joint according to claim 6,
**characterised in that**
spring means (77) are provided, by means of which the centering lug (74) is urged in the direction towards the journal (71).

8. Universal joint shaft according to one of claims 6 or 7,
**characterised in that**
the centering lug (83) has a base member (84), which is attached on the coupling sleeve (92) or on the first universal joint and which has a conical outer face (87) for abutment on the counter face, and
that the centering lug (83) has a centering member (85), which is urged by spring means (90), which are supported on the base member (84) and on the centering member (85), in the direction towards the journal (89) and which has a conical outer face (91) for abutment on the counter face.

## Revendications

1. Arbre de transmission à joint de Cardan, pour entraîner un rouleau d'un laminoir, comprenant
- un arbre de transmission (5),
- un premier joint de Cardan (3) qui est raccordé à une première extrémité de l'arbre de transmission (5),
- un deuxième joint de Cardan (4) qui est raccordé à une deuxième extrémité de l'arbre de transmission (5),
- un manchon d'accouplement (10, 26, 31, 67, 92),
- qui présente un axe longitudinal (29, 32, 65, 75),
- qui est relié au premier arbre de transmission (3),
- qui présente un alésage de réception (33) avec une ouverture (34) pour recevoir un tourillon (11, 27, 35, 48, 58, 63, 71, 89) d'un rouleau (12, 28), l'alésage de réception (33) formant des surfaces de transmission (122) pour transmettre des couples de rotation, et
- qui présente une première surface conique (40, 56, 66, 69, 82, 91, 133) agencée de manière concentrique par rapport à l'axe longitudinal (29, 32, 65, 75) et en éloignement de l'ouverture, la première surface conique (40, 56, 66, 69, 82, 91, 133) étant destinée à venir en appui sur une première surface antagoniste (52, 60) complémentaire identique sur le tourillon (11, 27, 35, 48, 58, 63, 71, 89) du rouleau (12, 28) pour éviter un jeu radial, ainsi que
- des moyens (23, 77, 90) par lesquels la première surface conique (40, 56, 60, 82, 91, 133) est sollicitée par une force le long de l'axe longitudinal (29, 32, 65, 75) en direction du rouleau (12, 28),
**caractérisé en ce que**
le manchon d'accouplement (10, 26, 31, 67, 92) présente dans la région de l'ouverture (34) un perçage cylindrique (45) qui sert à ce que le tourillon (11, 27, 35, 48, 58, 63, 71, 89, 93) prenne appui contre celui-ci avec une surface extérieure cylindrique (46) réalisée de manière correspondante.

2. Arbre de transmission à joint de Cardan selon la revendication 1, **caractérisé en ce que** les moyens par lesquels la première surface conique (40, 56, 66, 69, 82, 91, 133) est sollicitée par une force le long de l'axe longitudinal (29, 32, 65, 75) en direction du rouleau (12, 28) sont constitués par des moyens à ressort (23, 77, 90).

3. Arbre de transmission à joint de Cardan selon la revendication 2, **caractérisé en ce que** les moyens à ressort (23) sont agencés dans une unité de déplacement (20) de l'arbre de transmission (5).

4. Arbre de transmission à joint de Cardan selon l'une des revendications 1 à 3, **caractérisé en ce qu'**à partir de l'alésage de réception (33) est prévu un alésage central agencé coaxialement à l'axe longitudinal (32), lequel présente une surface intérieure (40, 56) qui s'évase en forme conique en direction de l'alésage de réception (33) et qui sert à venir en appui sur un tourillon de centrage (38, 49, 59) complémentaire identique du rouleau.

5. Arbre de transmission à joint de Cardan selon la revendication 4, **caractérisé en ce que** le perçage de centrage fait partie d'une bague de centrage (39, 50, 62) qui est insérée dans un perçage cylindrique (42, 55) du manchon d'accouplement (31).

6. Arbre de transmission à joint de Cardan selon l'une des revendications 1 à 3, **caractérisé en ce que** dans l'alésage de réception, un téton de centrage (66, 69, 74, 83, 132) tronconique est prévu coaxialement à l'axe longitudinal (65), téton de centrage dont la surface extérieure se rétrécit vers l'ouverture de l'alésage de réception et qui sert à venir en appui sur une surface intérieure complémentaire identique, d'un perçage de centrage (64, 72, 88) du tourillon (63, 71, 89, 127) du rouleau.

7. Arbre de transmission à joint de Cardan selon la revendication 6, **caractérisé en ce qu'**il est prévu des moyens à ressort (77) par lesquels le téton de centrage (74) est sollicité en direction du tourillon (71).

8. Arbre de transmission à joint de Cardan selon l'une ou l'autre des revendications 6 et 7, **caractérisé en ce que** le téton de centrage (83) présente une partie de base (84) qui est fixée au manchon d'accouplement (92) ou au premier joint de Cardan et qui présente une surface extérieure (87) conique destinée à venir en appui la surface antagoniste, et **en ce que** le téton de centrage (83) comprend une partie de centrage (85) qui est sollicitée en direction du tourillon (89) par l'intermédiaire de moyens à ressort (90) qui sont en appui contre la partie de base (84) et contre la partie de centrage (85), et qui présente une surface extérieure (91) conique destinée à venir en appui contre la surface antagoniste.
